# EUROPEAN PATENT SPECIFICATION

(11) **EP 3 233 752 B1**
(45) Date of publication and mention of the grant of the patent: **30.09.2020**
(21) Application number: 15817289.0
(22) Date of filing: 18.12.2015
(51) Int. Cl.: C04B 28/04, C04B 40/06, C09J 11/06, C09J 133/08

(54) **MULTICOMPONENT ADHESIVE SYSTEM AND ITS USE AS ADHESIVE IN BUILDING AND CONSTRUCTION**
MEHRKOMPONONETENKLEBSTOFFSYSTEM UND SEINER VERWENDUNG IM BAUGEWERBE
SYSTÈME ADHÉSIF À PLUSIEURS COMPOSANTS ET SON UTILISATION DANS LE BÂTIMENT ET LA CONSTRUCTION

(30) Priority: 19.12.2014 EP 14004318
(43) Date of publication of application: 25.10.2017
(73) Proprietor: Saint-Gobain Weber, 94370 Sucy-en-Brie (FR)
(72) Inventor: KOLBE, Georg, 46236 Bottrop (DE); POPRAWA, Christian, 42489 Wulfrath (DE); REISCH, Bruno, 79104 Freiburg (DE)
(74) Representative: Saint-Gobain Recherche
(86) International application number: PCT/EP2015/080655
(87) International publication number: WO 2016/097371

(56) References cited:
- DE-A1- 10 101 314
- DE-A1- 19 941 527
- DE-A1-102010 001 617
- DE-U1-202005 015 351
- US-A- 6 063 865

## Description

The invention relates to an aqueous multicomponent adhesive system appropriate in the building and construction field of use, e.g. for fixing/gluing glass, mineral (e.g. granite or sandstone), laminate (e.g. based on paper and/or wood fibres and epoxy, phenolic or polypropylene resin, compressed at high temperature, e.g. Trespa® by Trespa International B.V., Weert, NL)), fibre cement (e.g. Eternit®, Etex, BE), metal (e.g. steel, zinc, copper or the like), synthetic materials (plastics), concrete, lightweight concrete, wood, wooden composites, freestone, slate or fabrics or compound material based panes, panels, tiles, boards or plates, said system comprising multi (e.g. two)-component adhesive made of a dispersion containing a dispersed polymer in a first component and, in a further (e.g. second) component, an alkaline hydraulically hardening material, a pulverous rubber material and a low molecular weight organic linker molecule carrying two or more substituents independently selected from carboxyl (COOH) and amino (NH₂).

The invention also relates to the use of this adhesive in the mentioned fields. Also prefabricated building elements comprising one or more of said panes, panels, tiles, boards or plates as mentioned glued with the aqueous multicomponent system to substrates used in building, and other products (e.g. walls, floors and ceilings of ships or the like) obtained by gluing of said panes, panels, tiles, boards or plates with said multicomponent adhesive system to substrates used in building form invention embodiments.

Numerous ways of gluing materials to substrates used in building and construction are known, many of them using either mineral based mortars or (e.g. single or multi component) resin based systems resulting in thermosetting (cross-linked) hardened glues or especially (mostly aqueous) dispersion systems.

The huge possible variation in substrates used in building (concrete, stone, foam materials e.g. from plastics or mineral wool, wood, just to mention some examples etc.), also simply termed "substrates" herein, requires adhesives that cope with the various different properties and conditions inherent to the substrate materials, as well as the materials to be fixed to them.

Critical substrates such as wood or other water sensible materials, require particularly resilient and reliable adhesives.

Also the fixing of relatively extensive ("large") panes, panels, tiles, boards or plates and/or particularly heavy covering elements such covering elements, such as panes etc. as mentioned, e.g. with weights of up to 45 kg/m², requires high performance adhesives, especially when the covering elements are positioned vertically.

Especially also in case of such extensive covering elements such as panes etc. as covering elements, but also in the case of smaller ones such as tiles or the like, if the substrate to which they are fixed has different coefficients of thermal dilatation (e.g expansion and/or shrinkage) from those of the respective covering element materials, it is difficult to find appropriate adhesive systems that allow such deformation and provide lasting and reliable fixation.

EP 0 700 776 B1 and DE 10 2007 016 814 B4 relate to building elements with at least one attached glass pane or to prefabricated building facings for outer walls with glass panes directly or indirectly applied on the outer side of an insulation board where the glass pane is adhesively connected with the board. In the European Patent, copolymers of acrylate with acrylonitrile are described. Water is suggested to be used in an amount not allowing complete hydration of the cement contained in the mortar dispersion also included, so that the mortar still allows to include water for hydration. In both cases, the glass panes, covered with a layer of acrylate or polyacrylate or acrylate copolymer mortar dispersions, are used as semi-finished product. The semi-finished product (glass panel covered with a layer of the acrylate or polyacrylate or acrylate copolymer mortar dispersions) is glued on the wall with an additional mortar adhesive, applied on the jobsite.

Among the disadvantages of this system there have to be mentioned a) the requirement to use prefabricated plates already coated with the acrylate or polyacrylate or acrylate copolymer mortar dispersion, b) the requirement to use a sealant to make the joints between the prefabricated elements and ensure water proof property, c) the reliance on further hydration for binding the pre-fabricated glass panes to the substrate used in building, e.g. concrete, that is, the use of under-hydrated mortar and d) difficulties when said panes etc. are to be joined with difficult critical substrates, as for example with thermal insulation board. All these features make the handling very critical and susceptible to mistakes during assembly on the jobsite.

It would be advantageous to have dispersion based adhesive systems that allow for a self-drying (binding of free water in the dispersions) within the adhesive layer without the necessity to allow for evaporation of the water. In these systems binding of water takes place during hydration when they are hardening (e.g. with crystallization and/or precipitation of hydrates), e.g. based on the formation of ettringite (also named Woodfordite) represented e.g. by the formula Ca₆Al₂[(OH)₁₂|(SO₄)₃]·26H₂O from appropriate starting materials, e.g. mixtures comprising calcium sulfate sources (e.g. gypsum and/or hemihydrate), Portland cement and alumina cement. Such systems are already known in the prior art in the field, e.g. in WO 2013/040788 where glues for fixation of insulation boards are mentioned, WO 2012/069333 which mentions reinforcement plates from such material to be applied to insulation boards and WO 2010/057888 which describes fiber-enforced mortars as covers for insulation boards.

DE 20 2005 015 351 relates to a construction material system allowing the coating of floors, walls, roofs and the like with a certain residual elasticity, including styrene acrylates. No specific additives are disclosed that would allow for improvements e.g. in elasticity when use as adhesive is considered, and only a use to seal a floor with a coating is exemplified. The formulations described in that prior art does not provide the expected physical parameters such as the elongation at break and tensile strength that are necessary when various critical substrates are used.

The invention provides advantageously a dispersion based adhesive system that especially allows the gluing of materials with different coefficient of thermal dilatation, meaning that the adhesives must have a remaining elasticity to allow the two materials, glued to each other, to make their thermally based volume changes without delamination and disruption of the bonding established by the adhesive.

Especially for example when covering the outside of external thermal insulation composite systems, and more especially thermal insulation boards, it is useful to have decorative and/or protective water tight panels, plates, tiles, boards or plates to be fixed on the outside of a substrate, e.g. a mortar layer on insulating wall panels attached to a wall, floor or ceiling. This is also appropriate for the fixation of internal decorative (preferred) and/or protective covering elements (called also simply covering elements in the present disclosure) e.g. in wet rooms such as bath rooms, swimming pools, saunas and the like.

The invention, in a particular embodiment, thus relates also to external thermal insulation composite systems obtainable or obtained by gluing a glass, mineral (e.g. granite or sandstone), laminate (e.g. based on paper and/or wood fibers and epoxy, phenolic or polypropylene resin, compressed at high temperature, fiber cement, metal (e.g. steel, zinc, copper or the like), synthetic materials (plastics), concrete, lightweight concrete, wood, wooden composites, freestone, slate, fabrics or compound material, especially metal or more especially glass, based covering element selected from the group consisting of a pane, a panel, a tile, a board and a plate with an adhesive system according to the invention to a substrate used in building, where said covering element is one part of the composite system covering an external wall and preferably comprising at least a mortar layer, a thermal insulation board, and a reinforced base coating. Such composite systems are also called ETICS (for External Thermal Insulation Composite Systems).

The invention, in addition or alternatively, in one particular embodiment, relates to an internal composite system (thermally isolating or not) obtained by gluing a glass, mineral (e.g. granite or sandstone), laminate (e.g. based on paper and/or wood fibers and epoxy, phenolic or polypropylene resin, compressed at high temperature, fiber cement, metal (e.g. steel, zinc, copper or the like), synthetic materials (plastics), concrete, lightweight concrete, wood, wooden composites, freestone, slate, fabrics or compound material, especially metal or more especially glass, based covering element selected from the group consisting of a pane, a panel, a tile, a board and a plate with an adhesive system according to the invention to a substrate used in building, where said covering element is preferably one part of the composite system covering an internal wall.
It has now surprisingly been found that a multi (e.g. two)-component adhesive system (which forms a first invention embodiment) comprising a dispersion containing a dispersed polymer in a first component and, in a further (especially second) component, an alkaline hydraulically hardening material, a pulverous rubber material and a low molecular weight organic linker molecule carrying two or more substituents independently selected from carboxyl (COOH) and amino (-NH₂), or a mixture of such molecules, with the proviso that said molecule or mixture of molecules are such that they comprise at least one carboxyl group and at least one amino group, allows for adhesives with very good mechanical properties. In addition, these adhesive systems allow to first cover a substrate completely (and thus coat it in a waterproof way, e.g. with a minimum thickness of 0.5 to 5 mm, e.g. 2 mm, as no joints or seams are present in this layer, except in case of joints or seams between prefabricated elements which if necessary can be filled) and then, secondly, in the still "wet" plastic state, fix the covering elements (panes etc.) to the outer side of the adhesive system. Due to the resilience of the adhesive system in the hardened state, also the bonding of large covering elements (panes etc.) to substrates, even in case of different coefficients of thermal dilatation, is possible in a reliable way. Furthermore, adhesion to critical substrates used in building is possible. In addition, the adhesive can and preferably will provide a self-drying effect allowing water to be consumed to form e.g. ettringite, once the covering element is glued on the wall, said adhesive system being for use in the field of building and construction.

In another embodiment, the invention relates to the use of a multi (e.g. two)- component adhesive system comprising a dispersion containing a dispersed polymer in a first component and, in a further (e.g. second) component, an alkaline hydraulically hardening material together with a pulverous rubber material and a low molecular weight organic linker molecule carrying two or more substituents independently selected from carboxyl (COOH) and amino (-NH₂), or a mixture of such molecules, with the proviso that said molecule or mixture of molecules are such that they comprise at least one carboxyl group and at least one amino group for fixing/gluing glass, mineral, laminate (e.g. based on paper and/or wood fibres and epoxy, phenolic or polypropylene resin, compressed at high temperature, e.g. Trespa® by Trespa International B.V., Weert, NL)), fibre cement (e.g. Eternit®, Etex, BE), metal (e.g. steel, zinc, copper or the like), synthetic materials (plastics), concrete, lightweight concrete, wood, wooden composites, freestone, slate, fabrics or compound material based panes, panels, tiles, boards or plates, to a substrate of a building or of a prefabricated building element.

In yet another embodiment, the invention relates to a process or method of fixing/gluing glass, mineral, laminate (e.g. based on paper and/or wood fibres and epoxy, phenolic or polypropylene resin, compressed at high temperature, e.g. Trespa® by Trespa International B.V., Weert, NL)), fibre cement (e.g. Eternit®, Etex, BE), metal (e.g. steel, zinc, copper or the like), synthetic materials (plastics), concrete, lightweight concrete, wood, wooden composites, freestone, slate, fabrics or compound materials based panes, panels, tiles, boards or plates, to a substrate of a building or of a prefabricated building element, said method comprising providing an aqueous multicomponent adhesive system comprising a dispersion containing a dispersed polymer in a first component and, in a second component, an alkaline hydraulically hardening material together with a pulverous rubber material and a low molecular weight organic linker molecule carrying two or more substituents independently selected from carboxyl (COOH) and amino (-NH₂), or a mixture of such molecules, with the proviso that said molecule or mixture of molecules are such that they comprise at least one carboxyl group and at least one amino group as adhesive between the substrate and the panes, panels, tiles, boards or plates.

The total amount of water in the said aqueous multicomponent adhesive system is preferably high enough for the complete hydration of the hardening material. Preferably, the total amount of water is provided in the first component.

The new adhesive allows for the fixing of any of the mentioned panes, panels, tiles, boards or plates, especially of (preferred) glass plates, also to critical substrates used in building such as wood or other materials which may e.g. warp during their lifetime, or be susceptible to changes in case of contact with water or other water sensible materials, due to the ability to form a water proof cover on said substrates, and preferably to provide self-drying.

The general expressions used in the present disclosure preferably have the following meanings, of not otherwise defined, whereby one or more up to all more general features can be replaced by a more specific definition and any replacement of a more generic feature by a more specific definition leads to preferred versions of any invention embodiment.

"Low molecular weight" refers to molecular weight of 1000 g/mol or less, e.g. 800 g/mol or less, such as 600 g/mol or less, e.g.. in each case with a lower molecular weight of 100 or preferably 150 g/mol. For example, it refers to a molecular weight in the range from 100 or 150 to 500 g/mol.

Where "a" or "an" is used, this includes "one or more".

Where percentages are given (in W-%, meaning weight percent), except if not mentioned or derivable otherwise, they refer to the weight of all constituents taken together.

Panes, panels, tiles, boards or plates mentioned above and below can also be called covering elements throughout the present disclosure. They may especially serve decorative and/or protective purposes.

Where (meth) acrylic acid and the like is mentioned, this refers to acrylic, methacrylic or acrylic and methacrylic acid or the respective derivative mentioned, respectively.

A dispersed polymer in a dispersion (as commonly used for a solvent based adhesive or a polymer adhesive dispersion) forming part of the inventive compositions and uses/methods is preferably selected from the group consisting of homopolymers such as vinyl esters, polyesters, poly epoxides or polyamides, or copolymers; e.g. polymers or copolymers comprising one or two or more monomer units obtained from monomers selected from the group consisting of e.g. vinyl acetate, vinyl propionate, vinyl butyrate, vinyl-2-ethyl hexanoate, vinyl laureate, 1-methylvinyl acetate, vinyl pivalate or vinyl esters of alpha-branched monocarbonic acids with 9 to 11 carbon atoms; (meth)acrylic acid esters or amides, such as methylacrylate, methylmethacrylate, ethylacrylate, ethylmethacrylate, propylacrylate, propylmethacrylate, hydroxyethylacrylate, hydroxyethylmethacrylate, hydroxypropylacrylate, hydroxypropylmethacrylate, n-butylacrylate, n-butylmethacrylate, t-butylacrylate, t-butylmethacrylate or 2-ethylhexylacrylate; vinyl aromates, e.g. styrene, methylstyrene or vinyltoluene; olefins, such as ethylene, propylene, 1,3-butadiene and isoprene; 1,3-dienes; and vinylhalogenides, e.g. vinylchloride further (co)polymerizable monomers, such as fumaric acid, maleic acid or its diethyl or diisopropylester or its anhydride, ethylenically unsaturated sulfonic acids or their salts, such as vinyl sulfonic acid, 2-acrylamido-2-methyl-propane sulfonic acid, diallylphthalate, divinyl adipate, diallyl maleate, allylmethacrylate or triallylcyanurate, or crosslinking comonomers, such as acrylamidoglycolic acid, methylacrylamidoglycolic acid methyl ester, N-methylolacrylamide, N-methylomethacrylamide, N-methylsolallylcarbamate, alkyl ethers such as the isobutoxyether or ester of N-methylolacrylamide or - methacylamide, epoxy-functionalized such as glycidyl methacrylate or -acrylate, silicium functional comonomers, such as acryloxypropyltri(alkoxy)- or-methacryloxypropyltri(alkoxy) silanes, wherein alkoxy is e.g. methoxy, ethoxy or ethoxyethylen- or-propylenglycolethers, diaceton acrylamide and acetylacetoxyethylacrylate or -methacrylate.

Of special interest are for example (meth)acrylic copolymers (products of copolymerizaition of (meth)acrylic esters, e.g. methyl acrylate or methyl methacrylate, or of acrylamides or methacrylamides, e.g. N-methoxyacrylamide or N-methoxy-methacrylamide, and other unsaturated monomers, e.g. styrene (preferred), acrylonitrile.

Especially preferred are mixed polymerisates such as co-polymerisates of two or more, e.g. 3 or 4, monomers selected from the group consisting of styrene, (meth)acrylic acid, methyl or ethyl (meth)acrylate and (meth)acrylamide.

The polymer dispersion of the liquid component may, in a complete adhesive according to the invention, be present in an amount of 10 to 80 percent by weight (W-%), e.g. from 10 to 40 W-%, calculated as dry polymer.

Acidic polymer dispersions give very good experimental results. The pH value of the polymer dispersion of the liquid component is preferably an acidic pH (e.g. less than 7). Even more preferably, the pH value is less than 6,5.

The dispersion will harden preferably by crosslinking of the polymer particle which may be linked by Van-der-Waals interaction, polar bonding (e.g. via hydrogen bonds), ionic bonds or covalent bonds, or any combination of two or more thereof.

As pulverous rubber material, ground or otherwise particulate rubbers are especially preferred, e.g. particulate/pulverous material selected from the group consisting of recycled rubber, for example NR/SBR based rubber powder. Examples for appropriate materials are especially shredded, especially ground recycling rubber (e.g. ground in the cold), e.g. from waste rubber resulting from rubber tubes, rubber seals, rubber linings, hard rubber, soft rubber, rubber handles, rubber from old tires or the like, especially on the basis of volcanized natural rubber (NR) or volcanized synthetic rubber (SR), especially obtained from unsaturated uncured rubber with styrene and/or butadiene units (e.g. SBR rubber), or mixtures of NR and SR (especially NR and SBR). The pulverous rubber material may, e.g., be present in an amount of 3 to 80 W-%, for example from 5 to 60 W-%. Also precipitated rubber obtained e.g. as described in DE 199 41 527 may be used, though the other kinds of rubber materials are easier to obtain and thus preferred.

Low molecular weight organic linker compounds carrying two or more substituents independently selected from carboxyl (COOH) and amino (-NH₂), are preferably (e.g. one or preferably two or more) molecules comprising two or more groups per molecule independently selected from the group consisting of amino and carboxyl (-COOH), including the anhydride and/or carbamide (e.g. lactone or lactame) versions thereof, preferably one or more amino groups per molecule and one or more carboxyl groups per molecule or two amino and/or carboxyl groups per molecule, and an organic linker part with e.g. 2 to 40, such as 3 to 36, or 2 to 20, carbon atoms. The molecules may be in free form or in the form of (internal or other) acid addition salts (in the case of amino groups) or (in the case of carboxyl groups) salts with bases; with the proviso that the molecules or mixture of molecules are such that they comprise at least one carboxyl group and at least one amino group. For example, the molecule or mixture of molecules comprise at least one molecule carrying one amino and one carboxyl or two carboxyl groups and at least one molecule comprising one amino and one carboxyl group or two amino groups. Either each molecule comprises at least one amino group and at least one carboxyl group, or the mixture of molecules comprises at least one amino group and at least one carboxyl group which may be bound by extra molecular bonding. No matter, in the case of mixture of molecules, where the functions amino and carboxyl come from.
For example, if a molecule contains two identical groups (e.g. two amino groups or two carboxyl groups), the other functional group should be provided by another molecule, in order two have at least the two functional groups (amino and carboxyl groups) in the mixture of molecules to promote some binding effect. Preferably the molecules or the mixture of molecules is selected from the corresponding molecules listed below.

For example, such a material can be selected from the group consisting of aliphatic molecules, e.g. with 2 to 20 carbon atoms per molecule preferably 3 to 18 carbon atoms per molecule, and more preferably 6 to 12 carbon atoms per molecule such as hexamethylene diamine or dodecane diamine, aromatic monomers, e.g. with 6 to 18 ring carbon atoms, such as phenylene diamine, especially meta, ortho or most preferably p-phenylene diamine;
a carboxylic acid, such as an aliphatic dicarboxylic acid, e.g. with 1 to 20 carbon atoms, preferably 3 to 18 carbon atoms per molecule, and more preferably 6 to 12 carbon atoms per molecule, such as adipic acid, azelaic acid, dodecandicarboxylic acid, or sebaceic acid, or aromatic dicarboxylic acids, e.g. with 6 to 18 ring carbon atoms, such as aromatic dicarboxylic acids, for example ortho-, meta or especially p-terephthalic acid;
and from aminocarboxylic acids, such as 11-aminoundecancarboxylic acid, and reactive derivatives thereof, such as lactames, e.g. caprolactame, lauryl lactame or undecyllactame; or any mixtures of two or more thereof, or a salt thereof. Preferably, the low molecular weight organic linker compound comprises diamine having 6 to 12 carbon atoms per molecule and carboxylic acid having 6 to 12 carbon atoms per molecule.
Especially preferred are salts of dicarbonic acids and diamines falling under the definition of the low molecular weight compounds, such as salts of one or more dicarboxylic acids selected from adipic acid, azelaic acid, dodecandicarboxylic acid, sebaceic acid, ortho-, meta and p-terephthalic acid with of one or more diamines selected from the group consisting of hexamethylene diamine, dodecane diamine and phenylene diamine e.g. the salt mentioned in the Examples, or one of its salt forming constituents.

The low molecular weight organic linker compounds carrying two or more substituents independently selected from carboxyl (COOH) and amino (-NH₂) may be present in an amount from 0.005 to 5 W-%, especially from 0.01 to 5 W-% e.g. from 0.01 to
1W-%, especially from 0.1 to 1 W-%

Apparently the low molecular weight organic linker molecule carrying two or more substituents independently selected from carboxyl (COOH) and amino (-NH₂) which is used according to the invention contributes to the binding in some way, the linker part possibly being involved. However, such explanations are not to be considered as limiting the scope of the invention in any way.

Apart from the constituents already mentioned, one or preferably more than one alkaline hydraulically hardening material is present in a component not comprising the water based dispersion component, such as one or more cements, e.g. finely comminuted (e.g. ground or finely ground or milled) customary cement, such as Portland cement (including OPC and blended OPC according to EN 197), integrating blast-furnace slag, smelt slag (e.g. Portland smelt cement), pozzolan such as fly ash, calcined clays, silica fumes (pozzolanic cement), cement, high alumina cement, calcium sulfoaluminate, belite sulfoaluminate cement, or mixtures of two or more thereof. The weight share of the hydraulically hardening material may be in a range of from 10 to 55 W-%, e.g. from 10 to 40 W-%, especially from 15 to 40W-%.

In preferred embodiments of the invention, constituents that - during hardening - lead to the formation of ettringite (Ca₆Al₂(SO₄)₃(OH)₁₂·26H₂O) are included, especially in amounts allowing for the complete use of water present in the adhesive during gluing. Among these constituents, calcium sulfate (CaSO₄ or a hydrate thereof, such as gypsum or hemihydrate), CaO-containing cement and alumina containing cement are preferred and lead to the formation of ettringite.

The W/C ratio that corresponds to the ratio between the amount of water and the amount of alkaline hydraulically hardening material comprised in the aqueous multicomponent adhesive system is greater than 0.9 and preferably greater than 1. As mentioned above, the total amount of water is preferably provided in the first aqueous component.

It has been found that the multi-component adhesive systems according to the invention allow for especially good resilient properties, such as good compressibility and high extendibility/elasticity. If (as is preferably the case for use) the water content and other ingredients are chosen such that the water is completely bound during the hardening of the adhesive by its components, it is possible to glue also water impermeable materials (such as glass which is a preferred material for panes and the like in all invention embodiments) to substrates where water evaporation is not possible. The adhesives can be used under a variety of temperature conditions, e.g. in a temperature range from 0 to 50 °C, such as 3 to 40 or 5 to 25 °C. The hardening can be regulated to be relatively fast, e.g. in less than 30, preferably less than 24 hours. The components can also be used under conditions of high humidity.

Also filler can be added, such as sand, carbon black, quartz sand, limestone, stone or mineral flours, glass, corundum or the like, or mixtures of two or more thereof. The filler may be provided in an amount of 2 to 60 W-%, e.g. 5 to 40 W-%, especially 10 to 40 W-%.

Apart from the constituents mentioned so far and preferably, one or more further constituents may be present, such as water, defoamers (e.g. on silicone basis or without silicone), thickeners, e.g. on the basis of modified cellulose, bentonite, amorphous/disperse silica, polyurethane or acrylate or mixtures of two or more thereof; optionally including (e.g. polyethylene) fibers), accelerators, retardants, biocides, wetting agents, dispersants (e.g. anionic, cationic and/or non-ionic detergents), solvents other than water, coloring agents (e.g. dyes or pigments), plasticizers, light- or UV stabilizers or mixtures of two or more thereof. Such additives may be, related to weight of the complete components of the adhesive system according to the invention before use, be present in an amount of from 0.2 to 20 percent by weight, e.g. from 0.5 to 10 percent by weight.

An inventive adhesive system is preferably a two-components-system (e.g. in the form of a kit with at least two components packaged separately and combined or in one compartmented package ("kit of parts"), comprising a first component (also component A herein) with the dispersion containing an aqueous polymer dispersion and a second (before use water free) component (also component B herein) comprising the pulverous rubber material, a low molecular weight organic linker molecule carrying two or more substituents independently selected from carboxyl (COOH) and amino (-NH₂), preferably as defined more specifically above, and an alkaline hydraulically hardening material, preferably as defined more specifically above, more preferably one or more types of CaO containing cement, gypsum and/or alumina cement, preferably all three. Preferably the weight ratio of the components A to B (A:B) is between 0.2 to 1 up to 8 to 1 (0.2:1 to 8:1), in possible preferred embodiments of the invention from 0.5:1 to 5:1, especially 0.5:1 to 2:1. The two (or more) components can preferably be stored and handled separate from each other before use and then be mixed during the use (e.g. by mixing and if desired, e.g. if not already sufficient water is present in component A, adding water).

The two (or more) components (e.g. A and B) can be provided separately for joint use, e.g. as set or kit of conjointly packaged packing units such as containers, wreaths, sacks, buckets, bags or the like, for example for use on smaller surfaces or especially for gluing larger surface areas, e.g. using panes, tiles, plates, panels or boards having a surface area of 0,5 to 50 square meters, e.g. 1 to 5 m², e.g. up to 1.2 x 2.5 m. They can also be supplied in cartouches or the like. Such confecting allows for using the components near and in the area of use, especially to be glued, if desired under addition of water, thus starting the hardening process.

A multi- or preferably two-component adhesive system according to the invention preferably comprises a Component A comprising a dispersion, related to the complete component A only, in an amount of (expressed as the dry polymer) 40 to 99.8, e.g. 40 to 85 W-% (with a share of 0 (for the dry powder) to 60 W-% of water (for dispersion in the wet form)), as well as 0.1 to 30 W-%, e.g. 0.5 to 20 W-% of further constituents.

A multi- or preferably two-component adhesive system according to the invention preferably comprises a Component B with, apart from the low molecular weight linker compound(s) which are present in an amount from 0.005 to 4,95 W-%, e.g. from 0.05 to 1 W-%, alumina cement in a weight share from 15 to 50, e.g. from 25 to 35 W-%, Portland cement in a share of from 1 to 10 W-%, e.g. from 2 to 6 W-%, pulverous rubber material (especially ground recycled rubber on NR/SBR basis) in an amount of from 5 to 80 W-%, e.g. 20 to 50 W-%, fillers (especially sand and quartz) in an amount of from 5 to 40, e.g. from 10 to 40 W-%, especially from 20 to 40 W-%, gypsum in an amount of 2 to 30, e.g. 3 to 20 W-%, and one or more further constituents in an amount totaling to 0.5 to 15, e.g. from 1 to 10 W-%, these amounts being expressed related to the complete component B only.

The invention also relates to a mixture of a multicomponent system as defined above and below and added water.

Substrates used in building are especially walls, floors, ceilings, be it on the outer side or the inside of buildings (e.g in the case of indoor rooms, such as wet rooms, bath rooms or swimming pools) and may e.g. consist of concrete, wood, stone, masonry, brickwork or the like, and preferably insulation boards forming part of a thermal insulation composite systems. In such external thermal insulation composite systems (ETICS), the substrate is one part of the composite system that covers an external wall and usually comprises mortar layer, thermal insulation board, and reinforced base coat.

A further embodiment of the invention relates to a prefabricated building element, e.g. used for prefabricated construction for e.g. houses or other buildings, comprising a substrate used in building, an adhesive layer obtained from an adhesive system according to the invention and at least one glass, mineral, laminate (e.g. based on paper and/or wood fibers and epoxy, phenolic or polypropylene resin, compressed at high temperature, e.g. Trespa® by Trespa International B.V., Weert, NL)), fiber cement (e.g. Eternit®, Etex, BE), metal (e.g. steel, zinc, copper or the like), synthetic materials (plastics), lightweight concrete, wood, wooden composites, freestone, slate, fabrics or compound material, especially metal or more especially glass, based pane, panel, tile, board or plate fixed via said adhesive layer.

Yet a further embodiment of the invention relates to a product, e.g. a thermal insulation composite system, obtained by gluing a glass, mineral, laminate (e.g. based on paper and/or wood fibers and epoxy, phenolic or polypropylene resin, compressed at high temperature, e.g. Trespa® by Trespa International B.V., Weert, NL)), fiber cement (e.g. Eternit®, Etex, BE), metal (e.g. steel, zinc, copper or the like), synthetic materials (plastics), concrete, lightweight concrete, wood, wooden composites, freestone, slate, fabrics or compound material, especially metal or more especially glass, based pane, panel, tile, board or plate with an adhesive system according to the invention to a substrate used in building, especially an insulation material.
In all invention embodiments, the glass, mineral (e.g. granite or sandstone), laminate (e.g. based on paper and/or wood fibers and epoxy, phenolic or polypropylene resin, compressed at high temperature, e.g. Trespa® by Trespa International B.V., Weert, NL)), fiber cement (e.g. Eternit®, Etex, BE), metal (e.g. steel, zinc, copper or the like), synthetic materials (plastics), concrete, lightweight concrete, wood, wooden composites, freestone, slate, fabrics compound material, especially metal or more especially glass, based pane, panel, tile, board or plate preferably has a surface area of 0,5, more preferably 1, yet more preferably 1,5, e.g. 2 or more square meters, respectively. Such large surface areas are possible in view of the high resilience of the adhesive systems according to the invention. Glass plates are especially preferred.

Further embodiments of the invention can be found in the claims, especially the dependent claims.

The following Example illustrates the invention without limiting the scope thereof, though being a particular invention embodiment:

### Example: 2-Component Dispersion System

The following two components were prepared independently by mixing their constituents (percentages are percent by weight in relation to the complete respective component (100 %)

**Component A (a "liquid component"):**

| | |
|---|---|
| Aqueous self-crosslinking dispersion of a polymer based on acrylic ester, styrene, acrylic amide and acrylic acid (about 45 W-% water content, pH 3.7-5.3)) | 86.4% |
| Siliconfree Defoamer | 0.20% |
| Microbiocide | 0.10% |
| Water (tap water) | 12.50% |
| Thickening Agent (polyurethane based, non-ionic) (25 % in water) | 0.60% |
| 2-Amino-2 Methyl -1-Propanol (90%/10% water) | 0.20% |
| **Total:** | 100% |

**Component B (a "second component")**

| | |
|---|---|
| Fast hardening cement SUPRACEM 55^{a} | 4.08% |
| Silica sand | 14.49% |
| Calcium Aluminate Cement | 32.14% |
| Calcium sulfate dihydrate | 10.40% |
| Potassium/sodium tartrate | 0.16% |
| Sodium carbonate | 0.08% |
| Thickening agent Methyl hydroxyethyl cellulose | 0.10% |
| Lithium carbonate | 0.16% |
| Rubber powder (recycled ground rubber on NR/SBR basis) | 36.59% |
| Polyethylene fiber with amorphous silica (thickening agent) | 1.50% |
| Hexamethylendiamine Adipate | 0.30% |
| **Total:** | **100%** |

| | |
|---|---|
| )^{a} Newchem, Pfäffikon, Switzerland) | |

Component A and Component B were stored separately.

For comparison, a Comparison Example using the mentioned ingredients but omitting the low molecular weight linker molecule salt and thus containing 14.79 percent silica sand in component B is used.

In order to measure the physical characteristics of the adhesive system according to the present invention, some samples were prepared as follows:
First (liquid) component A and second component B are put together in a ratio of 1:1 and mixed to a lump-free mass.

The mass is applied on glass plates in a thickness of 2 mm and then hardened at 20 °C/65 % relative humidity for 7 days, respectively at 7 °C for 6 days. Then specimen according to type 1B (ISO 527) are stamped.

The following results are obtained for the parameters mentioned:

| **Parameter** | **Example 1** | **Comparison Example** |
|---|---|---|
| **Conditions: 7 days at 20° C / 65% r.H.** | | |
| Thickness - *(mm)* | 1,62 | 1,74 |
| Tensile strength (ISO 527-2) - *(N*/*mm²)* | 0,51 | 0,57 |
| Elongation at break (ISO 527-2) - *(%)* | 67,1 | 44,8 |

| **Conditions: 6 days at 7° C** | | |
|---|---|---|
| Thickness - *(mm)* | 1,64 | 1,65 |
| Tensile strength (ISO 527-2) - *(N*/*mm²)* | 0,38 | 0,47 |
| Elongation at break (ISO 527-2) - *(%)* | 79,9 | 59,9 |

This shows that the addition of the low molecular weight linker molecule salt leads to a surprising improvement of the elongation at break and a slightly or clearly smaller Tensile strength, indicating higher flexibility and resistance to stresses between the substrate and the plate fixed to it.

Thus the systems according to the invention are reasonably expected to show surprising advantages and allow for better fixation of e.g. glass plates and better compensation of tensions arising e.g. due to different thermal dilatation coefficients.

## Claims

1. An aqueous multicomponent adhesive system appropriate in the building and construction field of use, said system comprising a dispersion containing an aqueous polymer dispersion in a first component and, in a further (e.g. second) component, an alkaline hydraulically hardening material, a low molecular weight organic linker compound carrying two or more substituents independently selected from carboxyl and amino, where low molecular weight refers to 1000 g/mol or less, or a mixture of such compounds, with the proviso that said compound or mixture of compounds are such that they comprise at least one carboxyl group and at least one amino group, and a pulverous rubber material.

2. The aqueous multicomponent system according to claim 1 in the form of a two-component system, comprising a component A as said first component and a component B as said second component, preferably in the form of a kit of parts.

3. The aqueous multicomponent system according to any one of claims 1 or 2, comprising the dispersed polymer in a dispersion which is selected from the group consisting of homopolymers such as vinyl esters, polyesters, poly epoxides or polyamides, or copolymers; e.g. polymers or copolymers comprising one or two or more monomer units obtained from monomers selected from the group consisting of vinyl acetate, vinyl propionate, vinyl butyrate, vinyl-2-ethyl hexanoate, vinyl laureate, 1-methylvinyl acetate, vinyl pivalate or vinyl esters of alpha-branched monocarbonic acids with 9 to 11 carbon atoms; (meth)acrylic acid esters or amides, such as methylacrylate, methylmethacrylate, ethylacrylate, ethylmethacrylate, propylacrylate, propylmethacrylate, hydroxyethylacrylate, hydroxyethylmethacrylate, hydroxypropylacrylate, hydroxypropylmethacrylate, n-butylacrylate, n-butylmethacrylate, t-butylacrylate, t-butylmethacrylate or 2-ethylhexylacrylate; vinyl aromates, e.g. styrene, methylstyrene or vinyltoluene; olefins, such as ethylene, propylene, 1,3-butadiene and isoprene; 1,3-dienes; and vinylhalogenides, e.g. vinylchloride further (co)polymerizable monomers, such as fumaric acid, maleic acid or its diethyl or diisopropylester or its anhydride, ethylenically unsaturated sulfonic acids or their salts, such as vinyl sulfonic acid, 2-acrylamido-2-methyl-propane sulfonic acid, diallylphthalate, divinyl adipate, diallyl maleate, allylmethacrylate or triallylcyanurate, or crosslinking comonomers, such as acrylamidoglycolic acid, methylacrylamidoglycolic acid methyl ester, N-methylolacrylamide, N-methylomethacrylamide, N-methylsolallylcarbamate, alkyl ethers such as the isobutoxyether or ester of N-methylolacrylamide or -methacylamide, epoxy-functionalized such as glycidyl methacrylate or - acrylate, silicium functional comonomers, such as acryloxypropyltri(alkoxy)- or -methacryloxy-propyltri(alkoxy) silanes, wherein alkoxy is e.g. methoxy, ethoxy or ethoxyethylen- or-propylenglycolethers, diaceton acrylamide and acetylacetoxyethylacrylate or -methacrylate.

4. The aqueous multicomponent adhesive system of any one of claims 1 to 3, wherein the dispersed polymer in a dispersion is selected from (meth)acrylic copolymers (products of copolymerizition of (meth)acrylic esters, e.g. methyl acrylate or methyl methacrylate, or of acrylamides or methacrylamides, e.g. N-methoxylacrylamide or N-methoxy-methacrylamide, and other unsaturated monomers, e.g. styrene or acrylonitrile.

5. The aqueous multicomponent adhesive system of any one of claims 1 to 3, wherein the dispersed polymer in a dispersion is selected from co-polymerisates of two or more monomers selected from the group consisting of (meth)acrylic acid, methyl or ethyl (meth)acrylate, (meth)acrylamide and styrene.

6. The aqueous multicomponent adhesive system according to any one of claims 1 to 5, wherein the pH value of the polymer dispersion of the liquid component is an acidic pH, e.g. less than 7, more preferably, less than 6,5.

7. The aqueous multicomponent adhesive system according to any one of claims 1 to 6, wherein the pulverous rubber is a particulate/pulverous material selected from recycled rubber, for example NR/SBR based rubber powder; especially shredded, preferably ground recycling rubber, e.g. from waste rubber resulting from rubber tubes, rubber seals, rubber linings, hard rubber, soft rubber, rubber handles, rubber from old tires or the like, especially on the basis of volcanized natural rubber (NR) or volcanized synthetic rubber (SR), especially obtained from unsaturated uncured rubber with styrene and/or butadiene units (e.g. SBR rubber), or mixtures of NR and SR (especially NR and SBR).

8. The aqueous multicomponent adhesive system according to any one of claims 1 to 7, wherein the at least one low molecular weight organic linker compound is carrying two or more substituents independently selected from carboxyl (COOH) and amino (-NH₂), is a compound comprising two or more substituents independently selected from the group consisting of amino and carboxyl, including the anhydride and/or carbamide versions thereof, preferably one or more amino groups per molecule and one or more carboxyl groups per molecule or two amino and/or carboxyl groups per molecule, and an organic linker part with e.g. 2 to 40, such as 3 to 36, carbon atoms, where the compound or compounds may be in free form or in the form of internal or other acid addition salts in the case of amino groups or in the case of carboxyl groups salts with bases.

9. The aqueous multicomponent adhesive system according to any one of claims 1 to 7, wherein the low molecular weight compound(s) carrying two or more substituents selected from carboxyl and amino are selected from the group consisting of aliphatic compounds, e.g. with 2 to 20 carbon atoms per molecule, such as hexamethylene diamine or dodecane diamine, aromatic compounds, e.g. with 6 to 18 ring carbon atoms, such as phenylene diamine, especially meta, ortho or most preferably p-phenylene diamine, and a complementary carboxylic acid, such as an aliphatic dicarboxylic acid, e.g. with 1 to 20 carbon atoms, such as adipic acid, azelaic acid, dodecandicarboxylic acid, or sebaceic acid, or aromatic dicarboxylic acids, e.g. with 6 to 18 ring carbon atoms, such as aromatic dicarboxylic acids, for example ortho-, meta or especially p-terephthalic acid; and from aminocarboxylic acids, such as 11-aminoundecancarboxylic acid, and reactive derivatives thereof, such as lactames, e.g. caprolactame, lauryl lactame or undecyllactame; or any mixtures of two or more thereof.

10. The aqueous multicomponent adhesive system according to any one of claim 1 to 9, wherein the polymer dispersion is present in an amount of from 10 to 80 percent by weight, based on the dry polymer weight, the pulverous rubber material is present in an amount of from 3 to 80 percent by weight, the low molecular weight organic linker compound(s) carrying two or more substituents independently selected from carboxyl (COOH) and amino (-NH₂) is present in an amount of from 0.005 to 5 percent by weight, e.g. 0.01 to 5 percent by weight and the hydraulically hardening material is present in an amount of from 10 to 55 W-%, e.g. from 10 to 40 W-%, especially from 15 to 40 W-%.

11. The aqueous multicomponent adhesive system according to any one of claim 1 to 10, wherein the W/C ratio corresponding to the ratio between the amount of water and the amount of alkaline hydraulically hardening material is greater than 0.9 and preferably greater than 1.

12. The use of an aqueous multicomponent adhesive system as defined in any one of claims 1 to 11 for fixing or gluing glass, mineral (e.g. granite or sandstone ), laminate (e.g. based on paper and/or wood fibres and epoxy, phenolic or polypropylene resin, compressed at high temperature ), fibre cement metal (e.g. steel, zinc, copper or the like), synthetic materials (plastics), lightweight concrete, wood, wooden composites, freestone, slate, compound material or fabrics based panels, boards, tiles or plates, to a substrate of a building.

13. A process or method of fixing or gluing glass, mineral (e.g. granite or sandstone), laminate (e.g. based on paper and/or wood fibres and epoxy, phenolic or polypropylene resin, compressed at high temperature ), fibre cement, metal (e.g. steel, zinc, copper or the like), synthetic materials (plastics), lightweight concrete, wood, wooden composites, freestone, slate, fabrics or compound material based panels, panes, tiles, boards or plates, to a substrate of a building, said method comprising administering a dispersion comprising an aqueous polymer dispersion in a first component and a low molecular weight organic linker compound carrying two or more substituents independently selected from carboxyl and amino, where low molecular weight refers to 1000 g/mol or less, or a mixture of such compounds, with the proviso that said compound or mixture of compounds are such that they comprise at least one carboxyl group and at least one amino group, an alkaline hydraulically hardening material and a pulverous rubber material in a second component as adhesive between the substrate and the panels, panes, tiles, boards or plates, the total amount of water necessary for the curing of the adhesive system preferably being incorporated into the first component.

14. An external thermal insulation composite system obtained by gluing a glass, mineral (e.g. granite or sandstone), laminate (e.g. based on paper and/or wood fibers and epoxy, phenolic or polypropylene resin, compressed at high temperature, fiber cement, metal (e.g. steel, zinc, copper or the like), synthetic materials (plastics), concrete, lightweight concrete, wood, wooden composites, freestone, slate, fabrics or compound material, especially metal or more especially glass, based covering element selected from the group consisting of a pane, a panel, a tile, a board and a plate with an adhesive system according any one of claims 1 to 11 to a substrate used in building, where said covering element is one part of the composite system covering an external wall and preferably comprising at least a mortar layer, a thermal insulation board, and a reinforced base coating.

15. An internal thermal system, optionally with thermal properties, obtained by gluing a glass, mineral (e.g. granite or sandstone), laminate (e.g. based on paper and/or wood fibers and epoxy, phenolic or polypropylene resin, compressed at high temperature, fiber cement, metal (e.g. steel, zinc, copper or the like), synthetic materials (plastics), concrete, lightweight concrete, wood, wooden composites, freestone, slate, fabrics or compound material, especially metal or more especially glass, based covering element selected from the group consisting of a pane, a panel, a tile, a board and a plate with an adhesive system according any one of claims 1 to 11 to a substrate used in building, where said covering element is preferably one part of the composite system covering an internal wall.

16. A prefabricated building element, comprising a substrate used in building, an adhesive layer obtained from an adhesive system according to any one of claims 1 to 11 and at least one glass, mineral, laminate (e.g. based on paper and/or wood fibers and epoxy, phenolic or polypropylene resin, compressed at high temperature), fiber cement, metal (e.g. steel, zinc, copper or the like), synthetic materials (plastics), concrete, lightweight concrete, wood, wooden composites, freestone, slate, fabrics or compound material, especially metal or more especially glass, based pane, panel, tile, board or plate fixed via said adhesive layer.

## Patentansprüche

1. Wässriges Mehrkomponentenklebstoffsystem, das auf dem Anwendungsgebiet des Baugewerbes geeignet ist, wobei das System eine Dispersion umfasst, die eine wässrige Polymerdispersion in einer ersten Komponente und in einer weiteren (z. B. zweiten) Komponente ein alkalisches hydraulisch härtendes Material mit einem niedrigen Molekulargewicht, eine organische Linkerverbindung, die zwei oder mehr Substituenten trägt, die unabhängig voneinander aus Carboxyl und Amino ausgewählt sind, enthält, wobei sich das niedrige Molekulargewicht auf 1000 g/mol oder weniger bezieht, oder eine Mischung solcher Verbindungen, mit der Maßgabe, dass die Verbindung oder Mischung von Verbindungen so ausgelegt sind, dass sie mindestens eine Carboxylgruppe und mindestens eine Aminogruppe und ein pulverförmiges Kautschukmaterial umfassen.

2. Wässriges Mehrkomponentensystem nach Anspruch 1 in Form eines Zweikomponentensystems, umfassend eine Komponente A als erste Komponente und eine Komponente B als zweite Komponente, vorzugsweise in Form eines Teilekits.

3. Wässriges Mehrkomponentensystem nach einem der Ansprüche 1 oder 2, umfassend das dispergierte Polymer in einer Dispersion, das ausgewählt ist aus der Gruppe bestehend aus Homopolymeren wie Vinylestern, Polyestern, Polyepoxiden oder Polyamiden oder Copolymeren; z. B. Polymere oder Copolymere, die eine oder zwei oder mehrere Monomereinheiten umfassen, die aus Monomeren erhalten werden, die ausgewählt sind aus der Gruppe bestehend aus Vinylacetat, Vinylpropionat, Vinylbutyrat, Vinyl-2-ethylhexanoat, Vinyllaureat, 1-Methylvinylacetat, Vinylpivalat oder Vinylestern von alpha-verzweigten Monocarbonsäuren mit 9 bis 11 Kohlenstoffatomen; (Meth)acrylsäureestern oder -amiden wie Methylacrylat, Methylmethacrylat, Ethylacrylat, Ethylmethacrylat, Propylacrylat, Propylmethacrylat, Hydroxyethylacrylat, Hydroxyethylmethacrylat, Hydroxypropylacrylat, Hydroxypropylmethacrylat, n-Butylacrylat, n-Butylmethacrylat, t-Butylacrylat, t-Butylmethacrylat oder 2-Ethylhexylacrylat; Vinylaromaten, z. B. Styrol, Methylstyrol oder Vinyltoluol; Olefinen wie Ethylen, Propylen, 1,3-Butadien und Isopren; 1,3-Dienen; und Vinylhalogeniden, z. B. Vinylchlorid, weiteren (co)polymerisierbaren Monomeren, wie Fumarsäure, Maleinsäure oder deren Diethyl- oder Diisopropylester oder deren Anhydrid, ethylenisch ungesättigten Sulfonsäuren oder deren Salzen, wie Vinylsulfonsäure, 2-Acrylamido-2-methylpropansulfonsäure, Diallylphthalat, Divinyladipat, Diallylmaleat, Allylmethacrylat oder Triallylcyanurat, oder vernetzenden Comonomeren, wie Acrylamidoglykolsäure, Methylacrylamidoglykolsäuremethylester, N-Methylolacrylamid, N-Methylomethacrylamid, N-Methylsolallylcarbamat, Alkylethern wie Isobutoxyether oder Estern von N-Methylolacrylamid oder -methalcylamid, epoxyfunktionalisiert wie Glycidylmethacrylat oder -acrylat, siliciumfunktionellen Comonomeren wie Acryloxypropyltri(alkoxy)- oder-methacryloxypropyltri(alkoxy)silanen, wobei Alkoxy z. B. Methoxy, Ethoxy oder Ethoxyethylen- oder -propylenglykolether, Diacetonacrylamid und Acetylacetoxyethylacrylat oder -methacrylat ist.

4. Wässriges Mehrkomponentenklebstoffsystem nach einem der Ansprüche 1 bis 3, wobei das dispergierte Polymer in einer Dispersion ausgewählt ist aus (Meth)acrylcopolymeren (Produkten der Copolymerisation von (Meth)acrylestern, z. B. Methylacrylat oder Methylmethacrylat, oder von Acrylamiden oder Methacrylamiden, z. B. N-Methoxylacrylamid oder N-Methoxymethacrylamid, und anderen ungesättigten Monomeren, z. B. Styrol oder Acrylnitril.

5. Wässriges Mehrkomponentenklebstoffsystem nach einem der Ansprüche 1 bis 3, wobei das dispergierte Polymer in einer Dispersion ausgewählt ist aus Copolymerisaten von zwei oder mehr Monomeren, ausgewählt aus der Gruppe bestehend aus (Meth)acrylsäure, Methyl oder Ethyl(meth)arylat, (Meth)acrylamid und Styrol.

6. Wässriges Mehrkomponentenklebstoffsystem nach einem der Ansprüche 1 bis 5, wobei der pH-Wert der Polymerdispersion der flüssigen Komponente ein saurer pH-Wert ist, z. B. weniger als 7, bevorzugter weniger als 6,5.

7. Wässriges Mehrkomponentenklebstoffsystem nach einem der Ansprüche 1 bis 6, wobei der pulverförmige Kautschuk ein teilchenförmiges/pulverförmiges Material ist, ausgewählt aus recyceltem Kautschuk, beispielsweise Kautschukpulver auf NR/SBR-Basis; besonders zerkleinerter, vorzugsweise gemahlener Recyclingkautschuk, z. B. aus Kautschukabfällen aus Kautschukschläuchen, Kautschukdichtungen, Kautschukauskleidungen, Hartkautschuk, Weichkautschuk, Kautschukgriffen, Kautschuk aus alten Reifen oder dergleichen, insbesondere auf der Basis von vulkanisiertem Naturkautschuk (NR) oder vulkanisiertem Synthesekautschuk (SR), insbesondere erhalten aus ungesättigtem ungehärteten Kautschuk mit Styrol- und/oder Butadieneinheiten (z. B. SBR-Kautschuk) oder Gemischen aus NR und SR (insbesondere NR und SBR).

8. Wässriges Mehrkomponentenklebstoffsystem nach einem der Ansprüche 1 bis 7, wobei die mindestens eine organische Linkerverbindung mit niedrigem Molekulargewicht zwei oder mehr Substituenten trägt, die unabhängig voneinander aus Carboxyl (COOH) und Amino (-NH₂) ausgewählt sind, eine Verbindung umfassend zwei oder mehr Substituenten ist, die unabhängig voneinander aus der Gruppe bestehend aus Amino und Carboxyl ausgewählt sind, einschließlich der Anhydrid- und/oder Carbamidversionen davon, vorzugsweise eine oder mehrere Aminogruppen pro Molekül und eine oder mehrere Carboxylgruppen pro Molekül oder zwei Amino- und/oder Carboxylgruppen pro Molekül und einem organischen Linkerteil mit z. B. 2 bis 40, wie 3 bis 36, Kohlenstoffatomen, wobei die Verbindung oder Verbindungen in freier Form oder in Form von internen oder anderen Säureadditionssalzen im Fall von Aminogruppen oder im Fall von Carboxylgruppensalzen mit Basen vorliegen können.

9. Wässriges Mehrkomponentenklebstoffsystem nach einem der Ansprüche 1 bis 7, wobei die Verbindung(en) mit niedrigem Molekulargewicht, die zwei oder mehr aus Carboxyl und Amino ausgewählte Substituenten tragen, aus der Gruppe bestehend aus aliphatischen Verbindungen, z. B. mit 2 bis 20 Kohlenstoffatomen pro Molekül wie Hexamethylendiamin oder Dodecandiamin, aromatischen Verbindungen, z. B. mit 6 bis 18 Ringkohlenstoffatomen wie Phenylendiamin, insbesondere meta-, ortho- oder am bevorzugtesten p-Phenylendiamin, und einer komplementären Carbonsäure, wie eine aliphatische Dicarbonsäure, z. B. mit 1 bis 20 Kohlenstoffatomen, wie Adipinsäure, Azelainsäure, Dodecandicarbonsäure oder Sebaceinsäure, oder aromatische Dicarbonsäuren, z. B. mit 6 bis 18 Ringkohlenstoffatomen, wie beispielsweise aromatische Dicarbonsäuren, beispielsweise ortho-, meta- oder insbesondere p-Terephthalsäure; und aus Aminocarbonsäuren wie 11-Aminoundecancarbonsäure und reaktiven Derivaten davon wie Lactamen, z. B. Caprolactam, Lauryllactam oder Undecyllactam; oder jegliche Gemische von zwei oder mehreren davon ausgewählt sind.

10. Wässriges Mehrkomponentenklebstoffsystem nach einem der Ansprüche 1 bis 9, wobei die Polymerdispersion in einer Menge von 10 bis 80 Gew.-% vorliegt, bezogen auf das Trockenpolymergewicht, das pulverförmige Kautschukmaterial in einer Menge von 3 bis 80 Gew.-% vorliegt, die organische(n) Linkerverbindung(en) mit niedrigem Molekulargewicht, die zwei oder mehr Substituenten tragen, die unabhängig voneinander aus Carboxyl (COOH) und Amino (-NH₂) ausgewählt sind, in einer Menge von 0,005 bis 5 Gew.-%, z. B. 0,01 bis 5 Gew.-% vorliegen und das hydraulisch härtende Material in einer Menge von 10 bis 55 Gew.-%, z. B. 10 bis 40 Gew.-%, insbesondere von 15 bis 40 Gew.-% vorliegt.

11. Wässriges Mehrkomponentenklebstoffsystem nach einem der Ansprüche 1 bis 10, wobei das W/C-Verhältnis, das dem Verhältnis zwischen der Wassermenge und der Menge an alkalischem hydraulisch härtendem Material entspricht, größer als 0,9 und vorzugsweise größer als 1 ist.

12. Verwendung eines wässrigen Mehrkomponentenklebstoffsystems nach einem der Ansprüche 1 bis 11 zum Fixieren oder Kleben von Glas, Mineralien (z. B. Granit oder Sandstein), Laminat (z. B. auf Basis von Papier- und/oder Holzfasern und Epoxid-, Phenol- oder Polypropylenharz, bei hoher Temperatur komprimiert), Faserzement, Metall (z. B. Stahl, Zink, Kupfer oder dergleichen), synthetischen Materialien (Kunststoffe), Leichtbeton, Holz, Holzverbundwerkstoffen, Sandstein, Schiefer, Verbundwerkstoffen oder Paneelen auf Stoffbasis, Bretter, Fliesen oder Platten auf einem Substrat eines Gebäudes.

13. Prozess oder Verfahren zum Fixieren oder Kleben von Glas, Mineralien (z. B. Granit oder Sandstein), Laminat (z. B. auf Basis von Papier- und/oder Holzfasern und Epoxid-, Phenol- oder Polypropylenharz, bei hoher Temperatur komprimiert), Faserzement, Metall (z. B. Stahl, Zink, Kupfer oder dergleichen), synthetischen Materialien (Kunststoffe), Leichtbeton, Holz, Holzverbundwerkstoffen, Sandstein, Schiefer, Verbundwerkstoffen oder Paneelen auf Stoffbasis, Bretter, Fliesen oder Platten auf einem Substrat eines Gebäudes, wobei das Verfahren die Verabreichung einer Dispersion, umfassend eine wässrige Polymerdispersion in einer ersten Komponente und einer organischen Linkerverbindung mit niedrigem Molekulargewicht, die zwei oder mehr Substituenten trägt, unabhängig voneinander ausgewählt aus Carboxyl und Amino, umfasst, wobei sich das niedrige Molekulargewicht auf 1000 g/mol oder weniger bezieht, oder ein Gemisch von solchen Verbindungen mit der Maßgabe, dass die Verbindung oder das Gemisch von Verbindungen so sind, dass sie mindestens eine Carboxylgruppe und mindestens eine Aminogruppe, ein alkalisches hydraulisch härtendes Material und einen pulveriges Kautschukmaterial in einer zweiten Komponente als Klebstoff zwischen dem Substrat und den Paneelen, Scheiben, Fliesen, Brettern oder Platten umfassen, wobei die Gesamtmenge an Wasser, die zum Aushärten des Klebstoffsystems erforderlich ist, vorzugsweise in die erste Komponente eingearbeitet wird.

14. Externes Wärmedämmungsverbundsystem, das durch Kleben eines Glases, Minerals (z. B. Granit oder Sandstein), Laminats (z. B. auf Basis von Papier- und/oder Holzfasern und Epoxid-, Phenol- oder Polypropylenharz, bei hoher Temperatur komprimiert), Faserzements, Metalls (z. B. Stahl, Zink, Kupfer oder dergleichen), synthetischer Materialien (Kunststoffe), Beton, Leichtbeton, Holz, Holzverbundwerkstoffen, Sandstein, Schiefer, Geweben oder Verbundwerkstoffen, insbesondere Metall oder insbesondere Glas, ein Abdeckelement, ausgewählt aus der Gruppe bestehend aus einer Scheibe, eines Paneels, einer Fliese, eines Bretts und einer Platte, mit einem Klebstoffsystem nach einem der Ansprüche 1 bis 11 auf ein im Gebäude verwendetes Substrat erhalten wird, wobei das Abdeckelement ein Teil des Verbundsystems ist, das eine Außenwand bedeckt, und vorzugsweise mindestens eine Mörtelschicht, eine Wärmedämmplatte und eine verstärkte Grundbeschichtung umfasst.

15. Internes Wärmesystem, gegebenenfalls mit Wärmeeigenschaften, das durch Kleben eines Glases, Minerals (z. B. Granit oder Sandstein), Laminats (z. B. auf Basis von Papier- und/oder Holzfasern und Epoxid-, Phenol- oder Polypropylenharz, bei hoher Temperatur komprimiert), Faserzements, Metalls (z. B. Stahl, Zink, Kupfer oder dergleichen), synthetischer Materialien (Kunststoffe), Beton, Leichtbeton, Holz, Holzverbundwerkstoffen, Sandstein, Schiefer, Geweben oder Verbundwerkstoffen, insbesondere Metall oder insbesondere Glas, eines Abdeckelements, ausgewählt aus der Gruppe bestehend aus einer Scheibe, eines Paneels, einer Fliese, eines Bretts und einer Platte, mit einem Klebstoffsystem nach einem der Ansprüche 1 bis 11 auf ein im Gebäude verwendetes Substrat erhalten wird, wobei das Abdeckelement vorzugsweise ein Teil des Verbundsystems ist, das eine Innenwand bedeckt.

16. Vorgefertigtes Bauelement, umfassend ein beim Bauen verwendetes Substrat, eine aus einem Klebstoffsystem nach einem der Ansprüche 1 bis 11 erhaltene Klebeschicht und mindestens ein Glas, Mineral, Laminat (z. B. auf Basis von Papier- und/oder Holzfasern und Epoxid-, Phenol- oder Polypropylenharz, bei hoher Temperatur komprimiert), Faserzement, Metall (z. B. Stahl, Zink, Kupfer oder dergleichen), synthetische Materialien (Kunststoffe), Beton, Leichtbeton, Holz, Holzverbundwerkstoffe, Sandstein, Schiefer, Gewebe oder Verbundmaterial, insbesondere Metall oder insbesondere eine Scheibe, ein Paneel, eine Fliese, ein Brett oder eine Platte auf Glasbasis, die über der Klebeschicht befestigt sind.

## Revendications

1. Système adhésif aqueux à plusieurs composants approprié dans le domaine du bâtiment et de la construction, ledit système comprenant une dispersion contenant une dispersion aqueuse de polymère dans un premier composant et, dans un autre composant (par ex. un second), un matériau alcalin durcissant hydrauliquement, un composé lieur organique de faible masse moléculaire portant deux substituants ou plus, choisis indépendamment parmi carboxyle et amino, la faible masse moléculaire correspondant à 1 000 g/mol ou moins ou un mélange de tels composés, à condition que ledit composé ou mélange de composés soit tel qu'il comprend au moins un groupe carboxyle et au moins un groupe amino ainsi qu'un matériau caoutchouteux pulvérulent.

2. Système aqueux à plusieurs composants selon la revendication 1, sous la forme d'un système à deux composants, comprenant un composant A en tant que ledit premier composant et un composant B en tant que ledit second composant, de préférence sous la forme d'un kit de pièces.

3. Système aqueux à plusieurs composants selon l'une quelconque des revendications 1 ou 2, comprenant le polymère dispersé dans une dispersion qui est sélectionnée dans le groupe constitué d'homopolymères tels que des esters vinyliques, des polyesters, des polyépoxydes ou des polyamides ou des copolymères ; par ex. des polymères ou des copolymères comprenant deux motifs monomères ou plus obtenus à partir de monomères choisis dans le groupe constitué d'acétate de vinyle, de propionate de vinyle, de butyrate de vinyle, d'hexanoate de vinyl-2-éthyle, de laurate de vinyle, d'acétate de 1-méthylvinyle, de pivalate de vinyle ou d'esters vinyliques d'acides monocarboniques alpha-ramifiés comportant 9 à 11 atomes de carbone ; des esters ou des amides d'acide (méth)acrylique, tels que l'acrylate de méthyle, le méthacrylate de méthyle, l'acrylate d'éthyle, le méthacrylate d'éthyle, l'acrylate de propyle, le méthacrylate de propyle, l'acrylate d'hydroxyéthyle, le méthacrylate d'hydroxyéthyle, l'acrylate d'hydroxypropyle, le méthacrylate d'hydroxypropyle, l'acrylate de n-butyle, le méthacrylate de n-butyle, l'acrylate de t-butyle, le méthacrylate de t-butyle ou l'acrylate de 2-éthylhexyle ; des composés vinyliques aromatiques, par ex. le styrène, le méthylstyrène ou le vinyltoluène ; des oléfines, telles que l'éthylène, le propylène, 1,3-butadiène et l'isoprène ; des 1,3-diènes ; et des halogénures de vinyle, par ex. le chlorure de vinyle, d'autres monomères (co)polymérisables, tels que l'acide fumarique, l'acide maléique ou son ester diéthylique ou diisopropylique ou son anhydride, des acides sulfoniques à insaturation éthylénique ou leurs sels, tels que l'acide vinylsulfonique, l'acide 2-acrylamido-2-méthyl-propane sulfonique, le phtalate de diallyle, l'adipate de divinyle, le maléate de diallyle, le méthacrylate d'allyle ou le cyanurate de triallyle ou des comonomères de réticulation, tels que l'acide acrylamidoglycolique, l'ester méthylique d'acide méthylacrylamidoglycolique, le N-méthylolacrylamide, N-méthylolméthacrylamide, le N-méthylsolallylcarbamate, des alkyl éthers tels que l'isobutoxyéther ou l'ester de N-méthylolacrylamide ou - méthacylamide, à fonction époxy tel que le méthacrylate ou l'acrylate de glycidyle, des comonomères fonctionnels du silicium, tels que l'acryloxypropyltri(alcoxy)- ou le méthacryloxypropyltri(alcoxy) silane, où l'alcoxy est par ex. le méthoxy, l'éthoxy ou l'éthoxyéthylène- ou -propylèneglycoléthers, le diacétone acrylamide et l'acétylacétoxyéthylacrylate ou -méthacrylate.

4. Système adhésif aqueux à plusieurs composants selon une quelconque des revendications 1 à 3, dans lequel le polymère dispersé dans une dispersion est choisi parmi les copolymères (méth)acryliques (produits de copolymérisation d'esters (méth)acryliques, par ex. l'acrylate de méthyle ou le méthacrylate de méthyle ou les acrylamides ou des méthacrylamides, par ex. le N-méthoxylacrylamide ou le N-méthoxy-méthacrylamide et d'autres monomères insaturés, par ex. le styrène ou l'acrylonitrile.

5. Système adhésif aqueux à plusieurs composants selon une quelconque des revendications 1 à 3, dans lequel le polymère dispersé dans une dispersion est choisi parmi les copolymérisats de deux monomères ou plus choisis dans le groupe constitué par l'acide (méth)acrylique, le (méth)acrylate de méthyle ou d'éthyle, le (méth)acrylamide et le styrène.

6. Système adhésif aqueux à plusieurs composants selon une quelconque des revendications 1 à 5, dans lequel la valeur de pH de la dispersion de polymère du composant liquide est un pH acide, par ex. inférieur à 7, plus préférablement, inférieur à 6,5.

7. Système adhésif aqueux à plusieurs composants selon une quelconque des revendications 1 à 6, dans lequel le caoutchouc pulvérulent est un matériau particulaire/pulvérulent choisi parmi le caoutchouc recyclé, par exemple la poudre de caoutchouc à base de NR/SBR ; en particulier le caoutchouc de recyclage déchiqueté, de préférence broyé, par ex. à partir de déchets de caoutchouc provenant de tubes en caoutchouc, de joints en caoutchouc, de revêtements en caoutchouc, de caoutchouc dur, de caoutchouc souple, de poignées en caoutchouc, de caoutchouc de vieux pneus ou similaires, en particulier à base de caoutchouc naturel (NR) vulcanisé ou de caoutchouc synthétique (SR) vulcanisé, notamment obtenu à partir de caoutchouc non durci non saturé comportant des motifs de styrène et/ou de butadiène (par ex. du caoutchouc SBR) ou des mélanges de NR et de SR (en particulier du NR et du SBR).

8. Système adhésif aqueux à plusieurs composants selon une quelconque des revendications 1 à 7, dans lequel l'au moins un composé lieurn organique de faible masse moléculaire porte deux substituants ou plus choisis indépendamment parmi carboxyle (COOH) et amino (-NH₂), est un composé comprenant deux ou plusieurs substituants choisis indépendamment dans le groupe constitué par les groupes amino et carboxyle, y compris leurs versions anhydride et/ou carbamide, de préférence un ou plusieurs groupes amino par molécule et un ou plusieurs groupes carboxyle par molécule ou deux groupes amino et/ou carboxyle par molécule et une partie de lieur organique comportant par ex. 2 à 40, tels que 3 à 36, atomes de carbone, le composé ou les composés pouvant être sous forme libre ou sous la forme de sels d'addition d'acide internes ou autres dans le cas de groupes amino ou dans le cas de sels à groupes carboxyle comportant des bases.

9. Système adhésif aqueux à plusieurs composants selon une quelconque des revendications 1 à 7, dans lequel le ou les composés de faible masse moléculaire portant deux substituants ou plus choisis parmi le carboxyle et l'amino sont choisis dans le groupe constitué de composés aliphatiques, par ex. comportant 2 à 20 atomes de carbone par molécule, tels que l'hexaméthylène diamine ou la dodécane diamine, des composés aromatiques, par ex. comportant 6 à 18 atomes de carbone dans le cycle, tels que la phénylène diamine, en particulier la méta, l'ortho ou tout particulièrement la p-phénylène diamine et un acide carboxylique complémentaire, tel qu'un acide dicarboxylique aliphatique, par ex. comportant 1 à 20 atomes de carbone, tel que l'acide adipique, l'acide azélaïque, l'acide dodécanedicarboxylique ou l'acide sébacéique ou les acides dicarboxyliques aromatiques, par ex. comportant 6 à 18 atomes de carbone dans le cycle, tels que les acides dicarboxyliques aromatiques, par exemple l'acide ortho-, méta- ou surtout p-téréphtalique ; et parmi les acides aminocarboxyliques, tels que l'acide 11-amino-undécanecarboxylique et leurs dérivés réactifs, tels que les lactames, par ex. le caprolactame, le lauryl lactame ou l'undécyllactame ; ou tout mélange d'au moins deux d'entre eux.

10. Système adhésif aqueux à plusieurs composants selon une quelconque des revendications 1 à 9, dans lequel la dispersion de polymère est présente en une quantité de 10 à 80 pour cent en poids, sur la base du poids de polymère sec, le matériau de caoutchouc pulvérulent est présent en une quantité de 3 à 80 pour cent en poids, le(s) composé(s) lieur(s) organique(s) de faible masse moléculaire portant au moins deux substituants choisis indépendamment parmi carboxyle (COOH) et amino (-NH₂) sont présents en une quantité de 0,005 à 5 pour cent en poids, par ex. 0,01 à 5 pour cent en poids et le matériau durcissant hydrauliquement est présent en une quantité de 10 à 55 % en poids, par ex. de 10 à 40 % en poids, en particulier de 15 à 40 % en poids.

11. Système adhésif aqueux à plusieurs composants selon une quelconque des revendications 1 à 10, dans lequel le rapport W/C, correspondant au rapport entre la quantité d'eau et la quantité de matériau alcalin durcissant hydrauliquement, est supérieur à 0,9 et de préférence supérieur à 1.

12. Utilisation d'un système adhésif aqueux à plusieurs composants tel que défini dans une quelconque des revendications 1 à 11 pour la fixation ou pour le collage de panneaux, de planches, de carreaux ou de plaques à base de verre, de minéral (par ex. de granit ou de grès), de stratifié (par ex. à base de fibres de papier et/ou de bois et de résine époxy, phénolique ou de polypropylène, comprimé à haute température), de fibrociment, de métal (par ex. d'acier, de zinc, de cuivre ou similaires), de matières synthétiques (plastiques), de béton léger, de bois, de composites de bois, de pierre de taille, d'ardoise, de matériau composé ou de tissus à un substrat d'un bâtiment.

13. Procédé ou méthode de fixation ou de collage de panneaux, de vitres, de carreaux, de planches ou de plaques à base de verre, de minéral (par ex. de granit ou de grès), de stratifié (par ex. à base de fibres de papier et/ou de bois et de résine époxy, phénolique ou de polypropylène, comprimé à haute température), de fibrociment, de métal (par ex. d'acier , de zinc, de cuivre ou similaires), de matières synthétiques (plastiques), de béton léger, de bois, de composites de bois, de pierre de taille, d'ardoise, de tissus ou de matériau composé à un substrat d'un bâtiment, ledit procédé comprenant l'administration d'une dispersion comprenant une dispersion aqueuse de polymère dans un premier composant et un composé lieur organique de faible masse moléculaire portant deux substituants ou plus choisis indépendamment parmi le carboxyle et l'amino, la faible masse moléculaire correspondant à 1 000 g/mol ou moins ou un mélange de tels composés, à condition que ledit composé ou mélange de composés soit tel qu'il comprend au moins un groupe carboxyle et au moins un groupe amino, un matériau alcalin durcissant hydrauliquement et un matériau caoutchouteux pulvérulent dans un second composant en tant qu'adhésif entre le substrat et les panneaux, les vitres, les carreaux, les planches ou les plaques, la quantité totale d'eau nécessaire au durcissement du système adhésif étant de préférence incorporée dans le premier composant.

14. Système composite d'isolation thermique externe obtenu par collage d'un élément de recouvrement à base de verre, d'un minéral (par ex. de granit ou de grès), d'un stratifié (par ex. à base de fibres de papier et/ou de bois et de résine époxy, phénolique ou de polypropylène, comprimé à haute température, de fibrociment, d'un métal (par ex. d'acier, de zinc, de cuivre ou similaires), de matières synthétiques (plastiques), de béton, de béton léger, de bois, de composites de bois, de pierre de taille, d'ardoise, de tissus ou de matériau composé, notamment de métal ou plus particulièrement de verre, choisi dans le groupe constitué d'une vitre, d'un panneau, d'un carreau, d'une planche et d'une plaque avec un système adhésif selon une quelconque des revendications 1 à 11 à un substrat utilisé dans le bâtiment, ledit élément de recouvrement étant une partie du système composite couvrant un mur extérieur et comprenant de préférence au moins une couche de mortier, un panneau d'isolation thermique et un revêtement de base renforcé.

15. Système thermique interne, éventuellement à propriétés thermiques, obtenu par collage d'un élément de recouvrement à base de verre, d'un minéral (par ex. de granit ou de grès), d'un stratifié (par ex. à base de fibres de papier et/ou de bois et d'une résine époxy, phénolique ou de polypropylène comprimé à haute température, d'un fibrociment, d'un métal (par ex. d'acier, de zinc, de cuivre ou similaires), de matières synthétiques (plastiques), de béton, de béton léger, de bois, de composites en bois, de pierre de taille, d'ardoise, de tissus ou de matériau composite, en particulier de métal ou plus particulièrement de verre, sélectionné à partir du groupe constitué d'une vitre, d'un panneau, d'un carreau, d'une planche et d'une plaque avec un système adhésif selon l'une quelconque des revendications 1 à 11 à un substrat utilisé dans la construction, ledit élément de revêtement étant de préférence une partie du système composite couvrant un mur intérieur.

16. Élément de bâtiment préfabriqué comprenant un substrat utilisé dans le bâtiment, une couche adhésive obtenue à partir d'un système adhésif selon une quelconque des revendications 1 à 11 et au moins une vitre, un panneau, un carreau, une planche ou une plaque à base de verre, d'un minéral, d'un stratifié (par ex. à base de fibres de papier et/ou de bois et d'une résine époxy, phénolique ou de polypropylène compressé à haute température), d'un fibrociment, de métal (par ex. de l'acier, du zinc, du cuivre ou similaire), de matières synthétiques (plastiques), de béton, de béton léger, de bois, de composites de bois, de pierre de taille, d'ardoise, de tissus ou d'un matériau composé, notamment un métal ou plus particulièrement un verre fixé par ladite couche adhésive.
